# EUROPÄISCHE PATENTSCHRIFT

(11) **EP 1 284 375 B1**
(45) Veröffentlichungstag und Bekanntmachung des Hinweises auf die Patenterteilung: **06.07.2005**
(21) Anmeldenummer: 02017288.8
(22) Anmeldetag: 01.08.2002
(51) Int. Cl.: F16H 7/24, A01D 34/76, A01D 34/68

(54) **Mähwerk und Verfahren zum Austausch seines Zugmittels**
Cutter device and method to change its traction means
Faucheuse et méthode pour échanger ses moyens de traction

(30) Priorität: 07.08.2001 US 923686
(43) Veröffentlichungstag der Anmeldung: 19.02.2003
(73) Patentinhaber: DEERE & COMPANY, Moline, Illinois 61265-8098 (US)
(72) Erfinder: Buss, Steven Henry, Horicon, WI 53032 (US); Smith, Todd Lynn, Beaver Dam, WI 53916 (US)
(74) Vertreter: Lau-Loskill, Philipp, Dipl.-Phys.

(56) Entgegenhaltungen:
- FR-A- 2 801 951
- GB-A- 2 056 836
- US-A- 4 454 706
- US-A- 4 907 401
- US-A- 5 465 561

## Beschreibung

Die Erfindung betrifft ein Mähwerk mit einer Getriebebaugruppe mit einem Getriebe, wenigstens einer Zugmittelscheibe, welche mit dem Getriebe wirksam verbunden ist, und einem die Zugmittelscheibe umschlingenden Zugmittel und ein Verfahren zum Austauschen des Zugmittels einer Getriebebaugruppe.

Fahrzeuge zur Rasen-, Garten- und Grundstückspflege sind häufig mit Anbaugeräten mit rotierenden Arbeitsmitteln ausgestattet. Bei solchen Anbaugeräten kann es sich beispielsweise um Mähwerke aber auch um Kehreinrichtungen etc. handeln. Um die rotierenden Arbeitsmittel, d.h. die Mähmesser, -balken, -spindeln oder Bürsten etc. anzutreiben, werden üblicherweise Riemen-bzw. Zugmittelgetriebe eingesetzt.

Die US-A-4,907,401 zeigt ein Mähgerät mit einem Getriebe, das auf einer Welle des Mähgeräts verschwenkbar angebracht wird, um als Kupplung für ein einen Messerbalken des Mähgeräts antreibendes Zugmittel des Getriebes dienen zu können.

Bei bekannten Zugmittelgetrieben, beispielsweise entsprechend dem in der US-B-6,176,071 gezeigten, muss, um das Zugmittel bzw. den Riemen zu ersetzen oder auszutauschen, häufig die gesamte Getriebebaugruppe abgebaut werden. Dies ist zeit- und arbeitsintensiv und führt daher dazu, dass das Zugmittel unabhängig von Grad des Verschleißes bzw. einer wirklichen Notwendigkeit zu Zeiten geringer Arbeitsauslastung, wie beispielsweise in den Wintermonaten, ausgetauscht oder gewartet wird.

Das der Erfindung zugrunde liegende Problem wird in dem aufwändigen Ersetzen bzw. Austausch von Zugmitteln an bekannten Getriebebaugruppen von Mähwerken gesehen.

Dieses Problem wird erfindungsgemäß durch die Lehre der Patentansprüche 1 bzw. 9 gelöst, wobei in den weiteren Patentanspruchen die Lösung in vorteilhafter Weise weiterentwickelnde Merkmale aufgeführt sind.

Auf diese Weise wird ein Mähwerk mit einer Getriebebaugruppe zur Verfügung gestellt, bei der ein mit einer Zugmittelscheibe zum Antrieb eines Zugmittels wirksam verbundenes Getriebe derart an einem Mähwerksgehäuse des Mähwerks angebracht ist, dass es zumindest eine Betriebsstellung als auch eine Stellung einnehmen kann, in der das Zugmittel entfernt bzw. angebracht werden kann. Bei dem Zugmittel kann es sich um eine Kette handeln. Vorzugsweise ist das Zugmittel aber in der Art eines Riemens beispielsweise eines Keilriemens oder auch eines Zahnriemens ausgebildet. Es sind darüber hinaus aber auch weitere Anwendungsfälle denkbar, beispielsweise der Einsatz einer solchen Getriebebaugruppe an einem Spindelmähwerk oder an einer Kehreinrichtung mit um eine horizontale oder um eine/mehrere vertikale Achse(n) umlaufenden Bürsten. Eine solche Getriebebaugruppe kann an einem Arbeitsgerät und insbesondere an einem Mähwerk eingesetzt werden. Das Mähwerk kann mit einem oder mehreren um im Betrieb im Wesentlichen vertikale Achsen rotierenden Mähmessern, Messerbalken bzw. Sichelmessern versehen sein. Arbeitsgerate und insbesondere solche zur Rasen-, Garten- und Grundstückspflege sind häufig mit derartigen Getriebebaugruppen ausgestattet, da Riementriebe robust und einfach in der Handhabung sind, so dass auch eine ungeübte Bedienungsperson mit derartigen Arbeitsgeräten, wie auch deren Wartung schnell vertraut werden kann.

Es ist denkbar, dass eine solche Getriebebaugruppe direkt mit dem Getriebe eines Fahrzeugs, insbesondere eines Fahrzeugs zur Rasen-, Garten- und Grundstückspflege, wie einem selbstfahrenden bzw. handgeführten oder geschobenen Fahrzeug; in Verbindung steht. Insbesondere größere bzw. leistungsstärkere Fahrzeuge sind aber mit Übertragungseinrichtungen, wie Zapfwellen versehen, an die eine solche Getriebebaugruppe angeschlossen werden kann.

Ist das Getriebe an dem Mähwerk schwenkbar vorgesehen, so muss das Getriebe nicht vollständig von dem Mähwerk abgebaut werden, um das Zugmittel zu wechseln bzw. an- oder abzubauen. Durch ein Verschwenken des Getriebes zusammen mit der mit ihm wirksam verbundenen Zugmittelscheibe, insbesondere um eine zumindest im Wesentlichen horizontale Achse, liegt das Zugmittel nur noch locker um die Zugmittelscheibe und kann in einfacher Weise von dieser abgenommen werden.

Um eine einfache Herstellung und Handhabbarkeit zu gewährleisten, sind an dem Getriebe eine vordere und eine rückwärtige Halteplatte vorgesehen, wobei vorzugsweise die rückwärtige Halteplatte mit dem Mähwerk schwenkbar und die zweite Halteplatte lösbar verbindbar ist.

Um die Anzahl an Einzelteilen gering zu halten und eine gute Stabilität zu erzielen, kann zumindest die rückwärtige Halteplatte einstückig ausgeführt sein.

Das Zugmittel kann ein oder mehrere Arbeitsmittel in Rotation versetzen. Hierzu sind die Arbeitsmittel auf Zugmittelscheiben tragenden Wellen aufgesetzt, wobei die Zugmittelscheiben von dem Zugmittel umschlungen werden.

Bei den Arbeitsmitteln kann es sich um Kehreinrichtungen oder andere Arbeitsmittel, insbesondere zur Rasen-, Garten- und Grundstückspflege handeln. Vorzugsweise sind die Arbeitsmittel aber als Mähmesser, Messerbalken bzw. Sichelmesser ausgebildet.

Um eine Umlenkung der an die Getriebebaugruppe gelieferten Antriebsenergie zu ermöglichen, bevor es zu einer Einleitung in das Zugmittelgetriebe kommt, kann das Getriebe in der Art eines Winkelgetriebes ausgebildet sein bzw. ein solches umfassen.

Um das Zugmittel einer solchen Getriebebaugruppe auszutauschen bzw. an- und abzubauen, muss nur noch das Getriebe bewegt bzw. verschwenkt werden, wonach das Zugmittel abgenommen werden kann. Ein aufwendiges An- und Abbauen weiterer Teile ist nicht notwendig.

In der Zeichnung ist ein nachfolgend näher beschriebenes Ausführungsbeispiel der Erfindung dargestellt. Es zeigt:
- Fig. 1: eine perspektivische Darstellung eines Mahwerks mit einem Zugmittelgetriebe,
- Fig. 2: ein Schnitt durch das Mähwerk entlang der Linie A-A aus Fig. 1 und
- Fig. 3: eine Darstellung entsprechend Fig. 2, wobei ein Getriebe eine nach oben verschwenkte Stellung einnimmt.

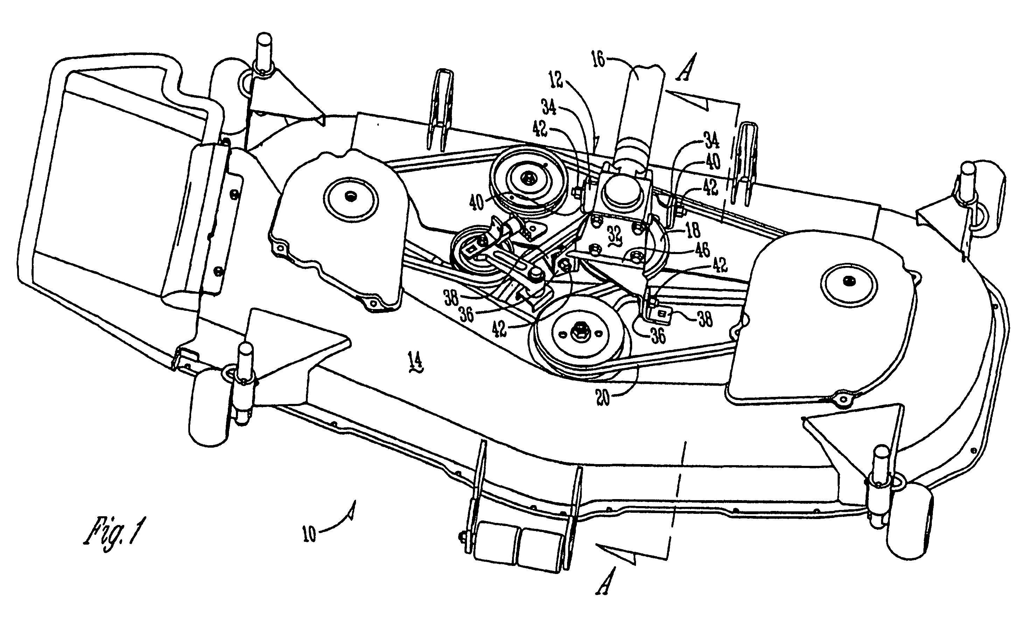

In Figur 1 wird ein Mähwerk bzw. ein Arbeitsgerät 10 gezeigt, welches im Wesentlichen eine Getriebebaugruppe 12 aufweist, welche an einem Mähwerksgehäuse 14 angebracht ist. Die Getriebebaugruppe 12 wird durch eine Welle oder Zapfelle 16 oder ein Getriebe eines Rasen- und Gartentraktors bzw. eines Fahrzeugs in bekannter Art und Weise angetrieben. Dieser Antrieb wird verwendet, um eine rotierende bzw. antreibende Antriebsriemenscheibe bzw. Zugmittelscheibe 18, welche an einem Antriebsriemen bzw. Zugmittel 20 angreift, um Messerantriebsscheiben bzw. angetriebene Zugmittelscheibe 22 anzutreiben oder zu drehen. Die angetriebene Zugmittelscheibe 22 dreht Arbeitsmittel bzw. Mähmesser 24 in dem Mähwerksgehäuse 14.

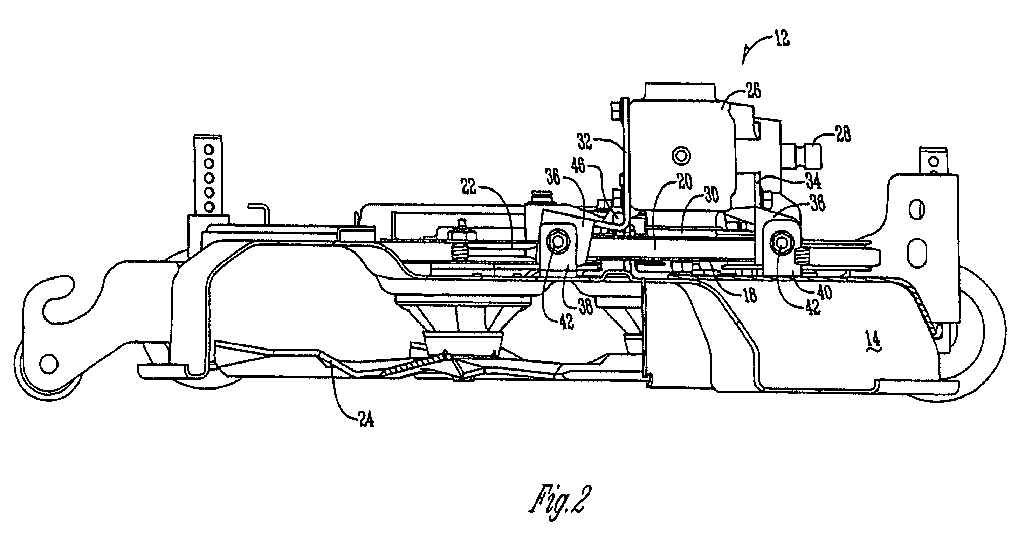

Wie es Figur 2 entnommen werden kann, weist die Getriebebaugruppe im Wesentlichen eine Eingangswelle 28 auf, welche wirksam mit der Zapfwelle 16 des Fahrzeugs verbunden ist und ein Getriebe 26 antreibt. Das Getriebe 26 überträgt den Antriebseingang von der Eingangswelle 28 zu der rotierenden, antreibenden Zugmittelscheibe 18. Die antreibende Zugmittelscheibe 18 dreht das Zugmittel 20 und treibt so die Mähmesser 24 an.

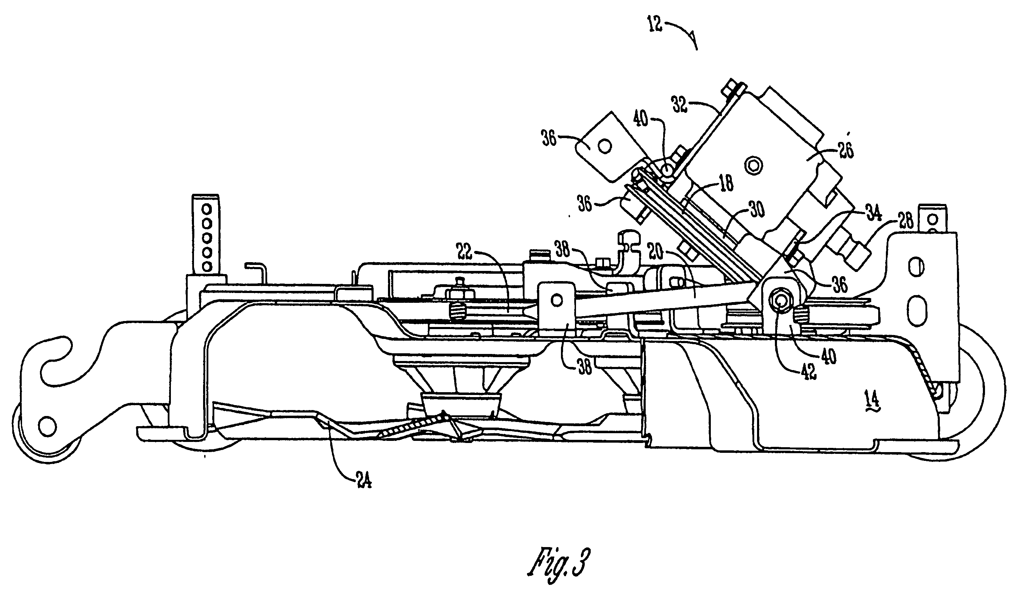

Vorzugsweise ist das Getriebe 26 bzw. das Getriebegehäuse an dem Mähwerk 14 während des Betriebs in einer festen Stellung gesichert. Wenn es notwendig ist, das Zugmittel 20 zu ersetzen, kann die Getriebebaugruppe 12 um eine horizontale Achse gedreht werden, um ein leichtes Entfernen und/oder einen Austausch des Zugmittels 20, wie dies in Figur 3 dargestellt wird, zu erlauben. Um dies zu erreichen, ist die Getriebebaugruppe 12 auf einer Seite an dem Mähwerk 10 gelenkig und auf der anderen Seite lösbar gesichert. Vorzugsweise ist eine vordere Halteplatte 32 an einer Vorderseite der Getriebebaugruppe 12 angebracht.

Die vordere Halteplatte 32 weist zwei Nasen 36 auf, welche mit zwei vorderen Haltern 38 richtig in einer Linie liegen. Eine Schraube oder jede andere Art von bekanntem Sicherungsmittel 42 ist durch den vorderen Halter 38 und die Nasen 36 gesteckt, um die vordere Halteplatte 32 und die Getriebebaugruppe 12 richtig an dem Mähwerk 14 zu sichern.

Darüber hinaus ist eine rückwärtige Halteplatte 34 an der Antriebsbaugruppe 12 angebracht. Die rückwärtige Halteplatte 34 weist ebenfalls zwei Nasen 36 auf, welche mit zwei rückwärtigen Haltern 40 korrespondieren. Die rückwärtigen Halter 40 liegen genau in einer Linie, um eine horizontale Achse in einem rückwärtigen Bereich der Getriebebaugruppe 12 zur Verfügung zu stellen. Während getrennte rückwärtige Halter 40 verwendet werden können, ist vorzugsweise ein rückwärtiger Halter vorgesehen, der durch einen einzelnen Metallstreifen gebildet wird, dessen Endbereich um neunzig Grad nach oben gebogen sind.

Die rückwärtigen Halter 40 sind an den Nasen 42 durch zusätzliche Schrauben bzw. Sicherungsmittel 42 gesichert.

Die Getriebebaugruppe 12 kann verschwenken oder um die horizontale Achse gedreht werden, indem einfach die Sicherungsmittel 42 von den vorderen Haltern 38 und Nasen 36 der vorderen Halteplatte 32 entfernt werden. Nach dem Entfernen der Sicherungsmittel 42 von den vorderen Halteplatten werden die Schrauben 42 und die rückwärtigen Halter 40 gelockert, um es der Getriebebaugruppe 12 zu erlauben, frei um die horizontale Achse zu drehen, die sich durch die Sicherungsmittel 42 in den rückwärtigen Haltern 40 erstreckt. Auf diese Weise ist es notwendig, die Antriebswelle 16 von dem Getriebe 26 zu entfernen. Ein Drehen der Getriebebaugruppe 12 stellt den notwendigen Freiraum zur Verfügung, um das Zugmittel 20 leicht anzubauen oder zu ersetzen, ohne die Getriebebaugruppe 12 vollständig zu entfernen.

Vorstehend wurde eine allgemeine Beschreibung der vorliegenden Erfindung sowie einer bevorzugten Ausführungsform der vorliegenden Erfindung dargelegt. Der Fachmann, den die vorliegende Erfindung betrifft, wird weitere Variationen in der Art der Ausführung und der Einrichtung, welche in die Lehre der vorliegenden Erfindung fallen, erkennen und ausführen können.

Entsprechend gelten alle solchen Veränderungen und Hinzufügungen als in den Bereich der Erfindung, wie er durch die folgenden Ansprüche bestimmt wird, gehörig.

## Patentansprüche

1. Mähwerk (10) mit einer Getriebebaugruppe (12) mit einem Getriebe (26), wenigstens einer Zugmittelscheibe (18), welche mit dem Getriebe (26) wirksam verbunden ist, und einem die Zugmittelscheibe (18) umschlingenden Zugmittel (20), **dadurch gekennzeichnet, dass** das Getriebe (26) derart an einem Mähwerksgehäuse (14) des Mähwerks (10) angebracht ist, dass es zwischen wenigstens einer Betriebsstellung und einer Stellung verschwenkbar ist, in der das Zugmittel (20) entfernt bzw. angebracht werden kann.

2. Mähwerk nach Anspruch 1, **gekennzeichnet durch** eine Eingangswelle (28), welche mit einer Antriebsquelle, wie beispielsweise einer Zapfwelle eines Fahrzeugs, verbindbar ist.

3. Mähwerk nach Anspruch 1 oder 2, **dadurch gekennzeichnet, dass** das Getriebe (26) vorzugsweise um eine zumindest im Wesentlichen horizontale Achse schwenkbar mit dem Mähwerksgehäuse (14) verbunden ist.

4. Mähwerk nach einem oder mehreren der vorherigen Ansprüche, **dadurch gekennzeichnet, dass** an dem Getriebe (26) eine vordere und eine rückwärtige Halteplatte (32, 34) vorgesehen ist, wobei eine, vorzugsweise die rückwärtige, Halteplatte (34) mit dem Arbeitsgerät (10) schwenkbar und die zweite Halteplatte (32) lösbar verbindbar ist.

5. Mähwerk nach Anspruch 4, **dadurch gekennzeichnet, dass** wenigstens die rückwärtige Halteplatte (34) im Wesentlichen einstückig ausgebildet ist.

6. Mähwerk nach einem oder mehreren der vorherigen Ansprüche, **dadurch gekennzeichnet, dass** das Zugmittel (20) derart mit einem oder mehreren Arbeitsmitteln verbunden ist, dass es diese rotierend antreiben kann.

7. Mähwerk nach Anspruch 6, **dadurch gekennzeichnet, dass** es sich bei dem Arbeitsgerät um ein Mähmesser (24), insbesondere ein Sichelmesser handelt.

8. Mähwerk nach einem oder mehreren der vorherigen Ansprüche, **dadurch gekennzeichnet, dass** das Getriebe (26) in der Art eines Winkelgetriebes ausgebildet ist bzw. ein solches umfasst.

9. Verfahren zum Austauschen des Zugmittels (20) einer Getriebebaugruppe (12) eines Mähwerks (10) nach einem oder mehreren der Ansprüche 1 bis 8, **dadurch gekennzeichnet, dass** das an dem Mähwerksgehäuse (14) angebrachte Getriebe (26) bewegt bzw. verschwenkt und im Anschluss das Zugmittel (20) ausgetauscht wird.

## Claims

1. A mower mechanism (10) with a transmission assembly (12) with a gearbox (26), at least one belt pulley (18) which is operatively connected to the gearbox (26), and a belt (20) trained round the belt pulley (18), **characterized in that** the gearbox (26) is so fitted on the mower mechanism housing (14) of the mower mechanism (10) that it can be pivoted between at least an operating position and a position in which the belt (20) can be removed or fitted.

2. A mower mechanism according to claim 1, **characterized by** an input shaft (28) which can be connected to a drive source, such a PTO shaft of a vehicle for example.

3. A mower mechanism according to claim 1 or 2, **characterized in that** the gearbox (26) is preferably pivotally connected to the mower mechanism housing (14) about an at least substantially horizontal axis.

4. A mower mechanism according to one or more of the preceding claims, **characterized in that** front and rear mounting plates (32, 34) are provided on the gearbox (26), wherein one, preferably the rear mounting plate (34), can be pivotally connected to the utility implement (10) and the second mounting plate (32) can be releasably connected thereto.

5. A mower mechanism according to claim 4, **characterized in that** at least the rear mounting plate (34) is formed essentially in one piece.

6. A mower mechanism according to one or more of the preceding claims, **characterized in that** the belt (20) is so coupled to one or more working means that it can drive these in rotation.

7. A mower mechanism according to claim 6, **characterized in that** the utility implement is a mower blade (24), especially a sickle blade.

8. A mower mechanism according to one or more of the preceding claims, **characterized in that** the gearbox (26) is in the nature of an angle drive or comprises such.

9. A method of exchanging the belt (20) of a transmission assembly (12) of a mower mechanism (10) according to one or more of the claims 1 to 8, **characterized in that** the gearbox (26) fitted on the mower mechanism housing (14) is moved or pivoted and the belt (20) is then exchanged.

## Revendications

1. Faucheuse (10) comprenant un sous-groupe de transmission (12) avec une transmission (26), au moins un disque de moyens de traction (18), lequel est relié de manière opérationnelle à la transmission (26), et des moyens de traction (20) enlaçant le disque de moyens de traction (18), **caractérisée en ce que** la transmission (26) est aménagée sur un logement de faucheuse (14) de la faucheuse (10) de telle sorte qu'elle peut pivoter entre au moins une position de fonctionnement et une position dans laquelle les moyens de traction (20) peuvent être retirés et/ou aménagés.

2. Faucheuse selon la revendication 1, **caractérisée par** un arbre d'entrée (28), lequel peut être relié à une source d'entraînement, comme par exemple un arbre de prise de force d'un véhicule.

3. Faucheuse selon la revendication 1 ou 2, **caractérisée en ce que** la transmission (26) est reliée au logement de faucheuse (14) de manière à pouvoir pivoter de préférence autour d'un axe au moins sensiblement horizontal.

4. Faucheuse selon l'une ou plusieurs des revendications précédentes, **caractérisée en ce qu'**une plaque de maintien avant et une plaque de maintien arrière (32, 34) sont prévues sur la transmission (26), une plaque de maintien, de préférence la plaque de maintien arrière (34), pouvant être raccordée pivotante avec l'instrument de travail (10) et de manière amovible avec la seconde plaque de maintien (32).

5. Faucheuse selon la revendication 4, **caractérisée en ce qu'**au moins la plaque de maintien arrière (34) est conçue sensiblement en une seule pièce.

6. Faucheuse selon l'une ou plusieurs des revendications précédentes, **caractérisée en ce que** les moyens de traction (20) sont reliés à un ou à plusieurs moyens de fonctionnement, de telle sorte qu'ils peuvent entraîner ceux-ci en rotation.

7. Faucheuse selon la revendication 6, **caractérisée en ce que** l'instrument de travail est une lame de fauchage (24), en particulier une lame de faux.

8. Faucheuse selon l'une ou plusieurs des revendications précédentes, **caractérisée en ce que** la transmission (26) est conçue à la façon d'un engrenage angulaire et/ou comprend un tel engrenage.

9. Procédé destiné à remplacer les moyens de traction (20) d'un sous-groupe de transmission (12) d'une faucheuse (10) selon l'une ou plusieurs des revendications 1 à 8, **caractérisé en ce que** la transmission (26) aménagée sur le logement de faucheuse (14) est déplacée et/ou pivotée et par la suite, les moyens de traction (20) sont remplacés.
